# FASCICULE DE BREVET EUROPEEN

(11) **EP 2 900 515 B1**
(45) Date de publication et mention de la délivrance du brevet: **09.05.2018**
(21) Numéro de dépôt: 13780182.5
(22) Date de dépôt: 26.09.2013
(51) Int. Cl.: B60K 35/00, B60K 37/06, G06F 3/0484, G06F 3/041, G06F 3/0481, G06F 3/0482, G06F 3/0488, H03K 17/96

(54) **MODULE DE COMMANDE**
STEUERMODUL
CONTROL MODULE

(30) Priorité: 27.09.2012 FR 1202576
(43) Date de publication de la demande: 05.08.2015
(73) Titulaire: Valeo Systemes Thermiques, 78320 Le Mesnil Saint Denis (FR)
(72) Inventeur: HUYNH, Tan Duc, F-93330 Neuilly sur Marne (FR)
(74) Mandataire: Pothmann, Karsten
(86) Numéro de dépôt international: PCT/FR2013/000253
(87) Numéro de publication internationale: WO 2014/049213

(56) Documents cités:
- EP-A1- 2 372 914
- WO-A2-2011/146362
- DE-A1-102008 052 485
- DE-A1-102010 018 637
- DE-A1-102010 042 376
- FR-A1- 2 967 101
- US-A1- 2009 085 880
- US-A1- 2012 068 956

## Description

Les modes de réalisation de la présente invention concernent un module de commande des équipements d'un véhicule automobile comprenant un écran d'affichage.

Il est désormais courant d'avoir des écrans d'affichage au niveau des tableaux de bord des véhicules et notamment au niveau de la console centrale. Ces écrans d'affichage permettent d'afficher des éléments graphiques représentant les différents menus auxquels l'utilisateur peut accéder pour commander les équipements du véhicule.

Par ailleurs, pour sélectionner les différents menus et les différentes fonctions, des commandes sont nécessaires. Afin de répondre aux exigences des constructeurs automobiles, ces commandes doivent être ergonomiques et ne doivent pas dégrader l'esthétique de l'habitacle intérieur. Ainsi, il convient de limiter le nombre de boutons de commande afin d'obtenir un tableau de bord présentant de grandes surfaces lisses. Ainsi, des technologies basées sur la reconnaissance de gestes comme les technologies optiques ou capacitive se sont développées. Cependant, ces technologies sont généralement très couteuses car elles requièrent soit un grand nombre de capteurs, soit des capteurs très couteux. Un module de commande comprenant les caractéristiques du préambule de la revendication 1 est connu du document WO 2011/146362 A2. Il apparaît donc nécessaire de surmonter au moins partiellement les inconvénients précités de l'état de la technique et de proposer un équipement permettant d'obtenir un module de commande dont les commandes sont ergonomiques, présentent un coût limité et préservent l'esthétique de l'habitacle du véhicule.

Ainsi, les modes de réalisation de la présente invention concernent un module de commande destiné à être installé dans un véhicule automobile et à piloter les équipements dudit véhicule automobile dans lequel le module de commande comprend un écran d'affichage et un bouton de commande couplé à l'écran d'affichage, ledit bouton de commande est configuré pour sélectionner des éléments graphiques de l'écran d'affichage associés aux commandes des équipements du véhicule automobile caractérisé en ce que le module de commande comprend également un dispositif de détection d'un mouvement d'une main d'un utilisateur, ledit dispositif présentant au moins deux capteurs capacitifs associés au bouton de commande et des moyens de traitement configurés pour détecter un mouvement d'une main d'un utilisateur en fonction des mesures des capteurs capacitifs.

Selon un autre aspect de la présente invention, des moyens de traitement sont configurés pour adapter les éléments graphiques affichés en fonction d'un mouvement détecté par le dispositif de détection d'un mouvement d'une main d'un utilisateur.

Selon un aspect supplémentaire de la présente invention, le bouton de commande est un bouton de commande rotatif.

Selon un aspect additionnel de la présente invention, lesdits au moins deux capteurs capacitifs sont placés autour du bouton de commande.

Selon un autre aspect de la présente invention, le module de commande comprend deux capteurs capacitifs situés latéralement de part et d'autre du bouton de commande.

Selon un autre aspect de la présente invention, des moyens de traitement sont configurés pour détecter la direction latérale d'un mouvement d'une main d'un utilisateur.

Selon un aspect additionnel de la présente invention, le module de commande comprend au moins trois capteurs capacitifs.

Selon un aspect supplémentaire de la présente invention, des moyens de traitement sont configurés pour détecter un mouvement circulaire d'une main d'un utilisateur et le sens de rotation du mouvement circulaire.

Selon un autre aspect de la présente invention, les moyens de traitement sont configurés pour adapter les éléments graphiques affichées sur l'écran d'affichage en fonction du mouvement de la main d'un utilisateur détecté par les capteurs capacitifs.

Selon un aspect supplémentaire de la présente invention, la détection d'un mouvement dans une première direction provoque l'affichage d'un menu spécifique destiné au conducteur du véhicule automobile et la détection d'un mouvement dans une deuxième direction provoque l'affichage d'un menu spécifique destiné à un passager d'un véhicule automobile.

D'autres caractéristiques et avantages de l'invention apparaîtront dans la description qui va maintenant en être faite, en référence aux dessins annexés qui en représentent à titre indicatif mais non limitatif, un mode de réalisation possible.

Sur ces dessins :
- La figure 1 représente une vue de face d'un module de commande selon un premier mode de réalisation de la présente invention;
- La figure 2 représente une vue latérale d'une coupe longitudinale du module de commande de la figure 1 ;
- La figure 3 représente un schéma d'un mouvement latéral d'une main devant le module de commande de la figure 1 ;
- La figure 4 représente une vue de face d'un module de commande selon un deuxième mode de réalisation de la présente invention;
- La figure 5 représente un schéma d'un mouvement circulaire d'une main devant le module de commande de la figure 4 ;

Les modes de réalisation de la présente invention concernent un module de commande comprenant un écran d'affichage couplé à un bouton de commande auquel est associé un dispositif de détection comprenant au moins deux capteurs capacitifs configurés pour détecter un mouvement d'un utilisateur. Les capteurs capacitifs étant complémentaires du bouton de commande pour sélectionner les éléments graphiques affichés sur l'écran.

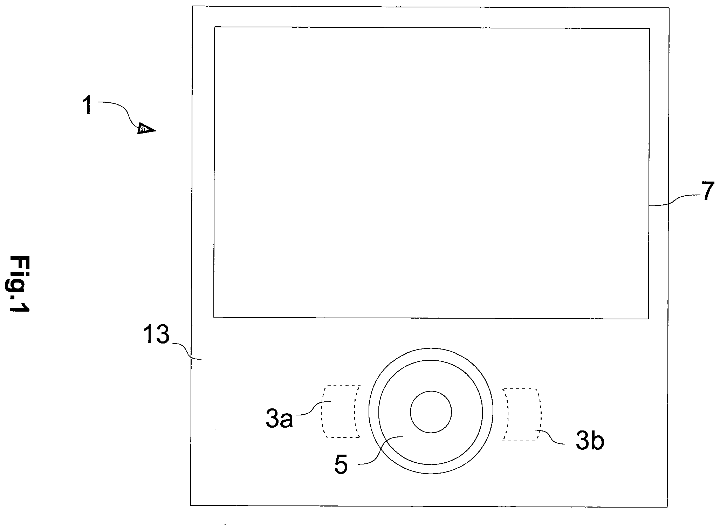

La figure 1 représente un module de commande 1 selon un premier mode de réalisation comprenant deux capteurs capacitifs 3a et 3b situés latéralement de part et d'autre d'un bouton de commande 5, ce dernier étant disposé en dessous de l'écran d'affichage 7. Les capteurs capacitifs 3a et 3b sont dessinés en pointillés car ils sont situés sous un film de protection 13 qui est opaque au niveau des capteurs de sorte que les capteurs ne sont pas visibles par l'utilisateur. L'écran d'affichage 7 est par exemple un écran de type TFT (« Thin-Film Transistor » en anglais ou transistor à couche mince), dont la diagonale est typiquement entre 4 et 12 pouces (soit entre 10 et 30 cm). Selon l'invention, le bouton de commande 5 est un bouton rotatif dont la rotation permet de sélectionner un menu ou élément graphique affiché sur l'écran 7 et l'appui permet de valider l'élément graphique sélectionné. Le bouton de commande 5 peut aussi être réalisé à l'aide d'une boule de commande (« trackball » en anglais) comprenant un interrupteur ou une molette cliquante ou un joystick comprenant un interrupteur. Les capteurs capacitifs 3a et 3b sont situés à proximité du bouton de commande 5, c'est à dire à une distance inférieure à cinq centimètres du bouton de commande 5.

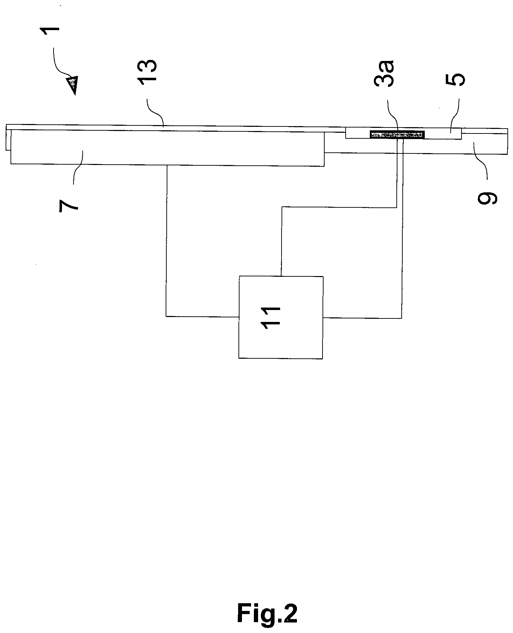

La figure 2 représente une vue selon une coupe longitudinale du module de commande 1 représentant la façade 9 du module, par exemple une façade en Zamak, qui supporte l'écran d'affichage 7, le bouton de commande 5 et les capteurs capacitifs 3a et 3b. De plus, la façade 9 est recouverte par un film de protection 13, par exemple un film en polycarbonate qui est transparent au niveau de l'écran d'affichage 7 et opaque sur le reste de sa surface. Les capteurs capacitifs 3a et 3b, le bouton de commande 5 et l'écran d'affichage 7 sont reliés à des moyens de traitement 11, par exemple un microcontrôleur.

Les capteurs capacitifs 3a et 3b comprennent une électrode de détection d'un condensateur dont la capacité varie en fonction de la présence d'une main d'un utilisateur formant la deuxième électrode du condensateur. En effet les capteurs capacitifs 3a et 3b forment une première électrode tandis que la main de l'utilisateur à proximité des capteurs capacitifs 3a et 3b forme la deuxième électrode d'un condensateur dont la valeur varie en fonction de la présence ou non de la main de l'utilisateur à proximité des capteurs capacitifs 3a et 3b.

La détection capacitive se fait par exemple en imposant des cycles de charge et de décharge entre le condensateur comprenant l'électrode de détection et un condensateur de charge de valeur connue. La charge se faisant par exemple en appliquant un signal de tension de forme rectangulaire comprenant des impulsions de durée et d'amplitude prédéfinies. Le nombre d'impulsions pour charger le condensateur de charge à une valeur prédéfinie étant dépendant de la valeur de la capacité du condensateur formé avec l'électrode de détection, on peut ainsi déduire la valeur de la capacité du condensateur comprenant l'électrode de détection en mesurant le nombre d'impulsions nécessaires pour que la tension aux bornes du condensateur de charge atteigne la valeur prédéfinie.

Cependant, il est à noter que d'autres techniques de mesure de capacité connues de l'état de la technique peuvent également être utilisées pour mesurer les variations de capacité au niveau du condensateur formé par l'électrode de détection.

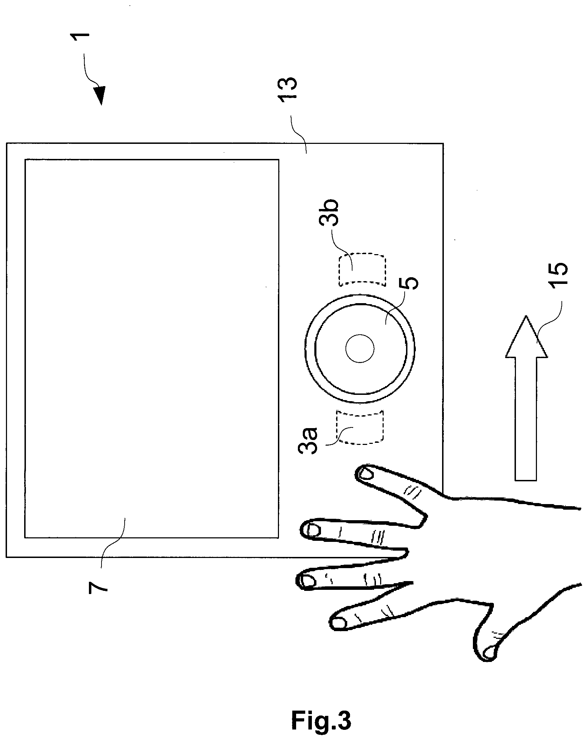

Les signaux issus des capteurs capacitifs 3a et 3b sont traités par les moyens de traitement 11 configurés pour détecter un mouvement prédéfini d'une main d'un utilisateur. Chaque capteur capacitif 3a, 3b est configuré pour détecter la présence d'une main d'un utilisateur dans une zone prédéfinie autour du capteur capacitif 3a, 3b. Ainsi, lorsque la présence d'une main est détectée successivement par le premier capteur 3a puis le deuxième capteur 3b dans un intervalle de temps prédéfini, par exemple deux secondes, ces deux détections successives sont interprétées par les moyens de traitement 11 comme un mouvement de la main de l'utilisateur du premier capteur 3a vers le deuxième capteur 3b. Un tel mouvement est représenté sur la figure 3. La flèche 15 représente la direction du déplacement de la main. Ainsi, lorsqu'un mouvement du premier capteur 3a vers le deuxième capteur 3b, c'est à dire de gauche à droite, est détecté, les éléments graphiques associés à ce mouvement sont affichés. Par exemple, un mouvement de gauche à droite peut être interprété comme étant un mouvement du conducteur de sorte que les élément graphiques affichées concerneront les équipements nécessaires pendant la conduite comme le système de navigation, le système de ventilation ou le réglage de la climatisation dans la zone du conducteur. A l'inverse, un mouvement de droite à gauche peut être interprété comme étant un mouvement d'un passager de sorte que les éléments graphiques affichées concerneront les équipements nécessaires au passager comme la vidéo, la radio ou la climatisation dans la zone du passager.

Par ailleurs, d'autres mouvements comme la succession d'un mouvement de gauche à droite puis de droite à gauche dans un intervalle de temps prédéfini correspondra à un affichage encore différent. Les éléments graphiques affichés pourront également variés en fonction d'autres éléments comme la configuration du véhicule, par exemple si le moteur est allumé ou éteint ou si une vitesse est enclenchée, ou en fonction de la détection de la présence d'un passager, par exemple à l'aide de capteurs situés au niveau des sièges.

Selon une configuration alternative, le bouton de commande 5 et les capteurs capacitifs 3a et 3b peuvent être situés au-dessus ou sur un côté de l'écran d'affichage 7.

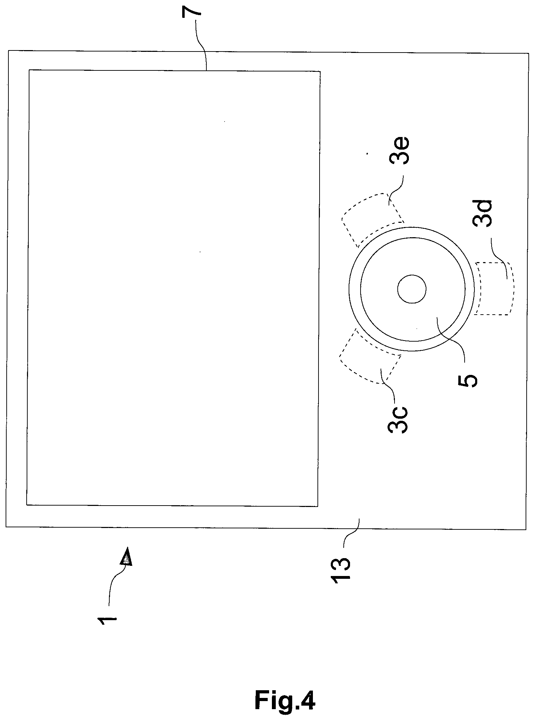

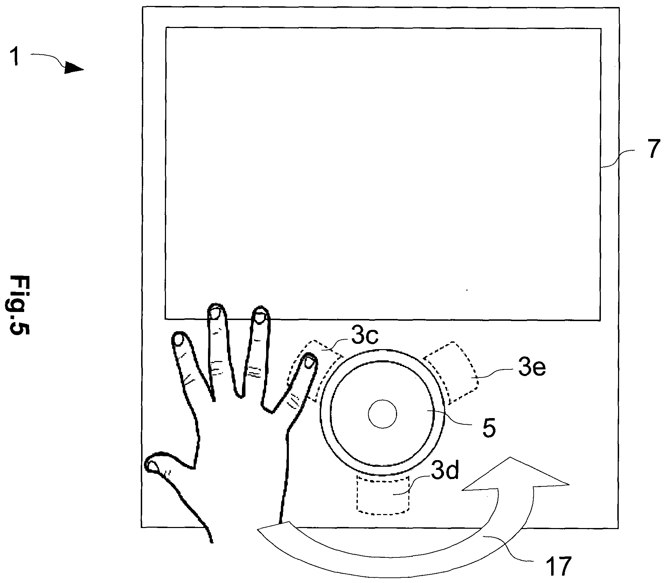

Selon un autre mode de réalisation représenté sur la figure 4, le module comprend trois capteurs capacitifs 3c, 3d et 3e répartis autour du bouton de commande 5 et situés sensiblement à équidistance les uns des autres. Les capteurs capacitifs 3c, 3d et 3e sont reliés à des moyens de traitement 11 configurés pour détecter un mouvement de rotation de la main autour du bouton de commande. En effet, en détectant la main de l'utilisateur successivement au niveau des trois capteurs capacitifs dans un intervalle de temps prédéterminé, les moyens de traitement 11 peuvent en déduire le sens de rotation de la main en fonction de l'ordre de détection des capteurs. Ainsi, la détection d'un premier sens de rotation correspondant au sens inverse des aiguilles d'une montre comme représenté sur la figure 5, où la flèche 17 représente le mouvement de la main, entrainera l'affichage d'un premier ensemble d'éléments graphiques sur l'écran 7 tandis que la détection d'un deuxième sens de rotation correspondant au sens des aiguilles d'une montre entrainera l'affichage d'un deuxième ensemble d'éléments graphiques. Comme précédemment, le bouton de commande 5 permet alors de sélectionner l'un des éléments graphiques et de valider l'élément graphique sélectionné. La détection d'un mouvement de rotation permet de limiter le risque de détection d'un mouvement involontaire d'un utilisateur. Par ailleurs, des modes de réalisation comprenant un nombre supérieur de capteurs capacitifs peuvent être envisagés.

Ainsi, la combinaison d'un bouton de commande et d'un nombre limité de capteurs capacitifs permet d'obtenir une commande ergonomique des commandes liées à un écran d'affichage grâce à la détection de mouvement tout en préservant l'esthétique de l'habitacle puisque seul le bouton de commande est apparent pour l'utilisateur. De plus le nombre de capteurs étant limité, le coût d'un module de commande tel que décrit précédemment reste relativement faible.

## Revendications

1. Module de commande (1) destiné à être installé dans un véhicule automobile et à piloter les équipements dudit véhicule automobile dans lequel le module de commande (1) comprend un écran d'affichage (7) et un bouton de commande (5) couplé à l'écran d'affichage (7), ledit bouton de commande (5) est configuré pour sélectionner des éléments graphiques de l'écran d'affichage (7) associés aux commandes des équipements du véhicule automobile **caractérisé en ce que** le module de commande (1) comprend également un dispositif de détection d'un mouvement d'une main d'un utilisateur, ledit dispositif présentant au moins deux capteurs capacitifs (3a, 3b, 3c, 3d, 3e) associés au bouton de commande (5) et des moyens de traitement (11) configurés pour détecter un mouvement d'une main d'un utilisateur en fonction des mesures des capteurs capacitifs (3a, 3b, 3c, 3d, 3e), **caractérise en ce que** le bouton de commande (5) est un bouton de commande rotatif, une boule de commande comprenant un interrupteur, une mollette cliquante ou un joystick comprenant un interrupteur.

2. Module de commande (1) selon la revendication 1 dans lequel des moyens de traitement (11) sont configurés pour adapter les éléments graphiques affichés en fonction d'un mouvement détecté par le dispositif de détection d'un mouvement d'une main d'un utilisateur.

3. Module de commande (1) selon la revendication 1 ou 2 dans lequel le bouton de commande (5) est un bouton de commande rotatif.

4. Module de commande (1) selon l'une des revendications précédentes dans lequel lesdits au moins deux capteurs capacitifs (3a, 3b, 3c, 3d, 3e) sont placés autour du bouton de commande (5).

5. Module de commande (1) selon la revendication 4 dans lequel le module de commande (1) comprend deux capteurs capacitifs (3a, 3b) situés latéralement de part et d'autre du bouton de commande (5).

6. Module de commande (1) selon la revendication 5 dans lequel des moyens de traitement (11) sont configurés pour détecter la direction latérale d'un mouvement d'une main d'un utilisateur.

7. Module de commande (1) selon la revendication 4 dans lequel le module de commande (1) comprend au moins trois capteurs capacitifs (3c, 3d, 3e).

8. Module de commande (1) selon la revendication 7 dans lequel des moyens de traitement (11) sont configurés pour détecter un mouvement circulaire d'une main d'un utilisateur et le sens de rotation du mouvement circulaire.

9. Module de commande (1) selon l'une des revendications précédentes dans lequel les moyens de traitement (11) sont configurés pour adapter les éléments graphiques affichées sur l'écran d'affichage (7) en fonction du mouvement de la main d'un utilisateur détecté par les capteurs capacitifs (3a, 3b, 3c, 3d, 3e).

10. Module de commande (1) selon la revendication 9 dans lequel la détection d'un mouvement dans une première direction provoque l'affichage d'un menu spécifique destiné au conducteur du véhicule automobile et la détection d'un mouvement dans une deuxième direction provoque l'affichage d'un menu spécifique destiné à un passager d'un véhicule automobile.

## Patentansprüche

1. Steuermodul (1), welches dazu bestimmt ist, in ein Kraftfahrzeug eingebaut zu werden und die Einrichtungen des Kraftfahrzeugs zu steuern, wobei das Steuermodul (1) einen Anzeigebildschirm (7) und einen mit dem Anzeigebildschirm (7) gekoppelten Bedienungsknopf (5) umfasst, wobei der Bedienungsknopf (5) dafür ausgelegt ist, graphische Elemente des Anzeigebildschirms (7) auszuwählen, die den Steuerungen der Einrichtungen des Kraftfahrzeugs zugeordnet sind, **dadurch gekennzeichnet, dass** das Steuermodul (1) außerdem eine Vorrichtung zur Detektion einer Bewegung einer Hand eines Benutzers umfasst, wobei diese Vorrichtung wenigstens zwei kapazitive Sensoren (3a, 3b, 3c, 3d, 3e), die dem Steuerknopf (5) zugeordnet sind, und Verarbeitungsmittel (11), die dafür ausgelegt sind, in Abhängigkeit von den Messungen der kapazitiven Sensoren (3a, 3b, 3c, 3d, 3e) eine Bewegung einer Hand eines Benutzers zu detektieren, aufweist,
**dadurch gekennzeichnet, dass** der Steuerknopf (5) ein drehbarer Steuerknopf, ein Trackball, der einen Schalter umfasst, ein Klickrädchen oder ein Joystick, der einen Schalter umfasst, ist.

2. Steuermodul (1) nach Anspruch 1, wobei Verarbeitungsmittel (11) dafür ausgelegt sind, die angezeigten graphischen Elemente in Abhängigkeit von einer Bewegung anzupassen, die von der Vorrichtung zur Detektion einer Bewegung einer Hand eines Benutzers detektiert wird.

3. Steuermodul (1) nach Anspruch 1 oder 2, wobei der Steuerknopf (5) ein drehbarer Steuerknopf ist.

4. Steuermodul (1) nach einem der vorhergehenden Ansprüche, wobei die wenigstens zwei kapazitiven Sensoren (3a, 3b, 3c, 3d, 3e) um den Steuerknopf (5) herum angeordnet sind.

5. Steuermodul (1) nach Anspruch 4, wobei das Steuermodul (1) zwei kapazitive Sensoren (3a, 3b) umfasst, die sich beiderseits seitlich des Steuerknopfes (5) befinden.

6. Steuermodul (1) nach Anspruch 5, wobei Verarbeitungsmittel (11) dafür ausgelegt sind, die seitliche Richtung einer Bewegung einer Hand eines Benutzers zu detektieren.

7. Steuermodul (1) nach Anspruch 4, wobei das Steuermodul (1) wenigstens drei kapazitive Sensoren (3c, 3d, 3e) umfasst.

8. Steuermodul (1) nach Anspruch 7, wobei Verarbeitungsmittel (11) dafür ausgelegt sind, eine kreisförmige Bewegung einer Hand eines Benutzers und die Drehrichtung der kreisförmigen Bewegung zu detektieren.

9. Steuermodul (1) nach einem der vorhergehenden Ansprüche, wobei die Verarbeitungsmittel (11) dafür ausgelegt sind, die auf dem Anzeigebildschirm (7) angezeigten graphischen Elemente in Abhängigkeit von der Bewegung der Hand eines Benutzers anzupassen, die von den kapazitiven Sensoren (3a, 3b, 3c, 3d, 3e) detektiert wird.

10. Steuermodul (1) nach Anspruch 9, wobei die Detektion einer Bewegung in einer ersten Richtung das Anzeigen eines speziellen Menüs hervorruft, das für den Führer des Kraftfahrzeugs bestimmt ist, und die Detektion einer Bewegung in einer zweiten Richtung das Anzeigen eines speziellen Menüs hervorruft, das für einen Mitfahrer eines Kraftfahrzeugs bestimmt ist.

## Claims

1. Control module (1) to be installed in a motor vehicle and used to control the equipment of said motor vehicle, in which the control module (1) comprises a display screen (7) and a control button (5) coupled to the display screen (7), said control button (5) is configured to select graphic elements of the display screen (7) associated with the controls of the equipment of the motor vehicle, **characterized in that** the control module (1) also comprises a device for detecting a movement of a user's hand, said device having at least two capacitive sensors (3a, 3b, 3c, 3d, 3e) associated with the control button (5) and processing means (11) configured to detect a movement of a user's hand according to measurements of the capacitive sensors (3a, 3b, 3c, 3d, 3e), **characterized in that** the control button (5) is a rotary control button, a trackball comprising a switch, a click wheel or a joystick including a switch.

2. Control module (1) according to Claim 1, wherein processing means (11) are configured to adapt the displayed graphic elements according to a movement detected by the device for detecting a movement of a user's hand.

3. Control module (1) according to Claim 1 or 2, wherein the control button (5) is a rotary control button.

4. Control module (1) according to any of the preceding claims, wherein said at least two capacitive sensors (3a, 3b, 3c, 3d, 3e) are placed around the control button (5).

5. Control module (1) according to Claim 4, wherein the control module (1) comprises two capacitive sensors (3a, 3b) located on either side of the control button (5) .

6. Control module (1) according to Claim 5, wherein processing means (11) are configured to detect the sideways direction of a movement of a user's hand.

7. Control module (1) according to Claim 4, wherein the control module (1) comprises at least three capacitive sensors (3c, 3d, 3e).

8. Control module (1) according to Claim 7, wherein processing means (11) are configured to detect a circular movement of a user's hand and the direction of rotation of the circular movement.

9. Control module (1) according to any of the preceding claims, wherein the processing means (11) are configured to adapt the graphic elements displayed on the display screen (7) according to the movement of a user's hand detected by the capacitive sensors (3a, 3b, 3c, 3d, 3e).

10. Control module (1) according to Claim 9, wherein the detection of a movement in a first direction causes the display of a specific menu intended for the driver of the motor vehicle, and the detection of a movement in a second direction causes the display of a specific menu intended for a passenger in a motor vehicle.
